# EUROPEAN PATENT APPLICATION

(11) **EP 4 671 910 A1**
(43) Date of publication of application: **31.12.2025**
(21) Application number: 24921475.0
(22) Date of filing: 29.09.2024
(51) Int. Cl.: G06F 1/08

(54) **CLOCK SIGNAL PROCESSING SYSTEM, METHOD, AND APPARATUS, AND SERVER**

(30) Priority: 30.01.2024 CN 202410130675
(71) Applicant: Suzhou Metabrain Intelligent Technology Co., Ltd., Suzhou, Jiangsu 215000 (CN)
(72) Inventor: WANG, Haibo, Suzhou, Jiangsu 215000 (CN); GE, Zhihua, Suzhou, Jiangsu 215000 (CN); WANG, Dong, Suzhou, Jiangsu 215000 (CN)
(74) Representative: Studio Torta S.p.A.
(86) International application number: PCT/CN2024/122105
(87) International publication number: WO 2025/161451

(57) **Abstract**

The present application relates to the technical field of computers, and discloses a clock signal processing system, method, and apparatus, and a server. The system includes: an overclocking module, a non-overclocking module, and a signal processor. The overclocking module is configured to: generate an overclocked clock signal and transmit the overclocked clock signal to the signal processor. The non-overclocking module is configured to: generate a non-overclocked clock signal and transmit the non-overclocked clock signal to the signal processor. The signal processor is configured to: select the overclocked clock signal or the non-overclocked clock signal as a target clock signal based on current service information of a server, and transmit the target clock signal to a clock signal receiving end through an output end. According to the system provided by the above solution, the overclocking module and the non-overclocking module are simultaneously arranged in the system, and switching and outputting of the overclocked clock signal and the non-overclocked clock signal are implemented through the signal processor based on the current service information of the server, so that the system is compatible with an overclocking working mode and a non-overclocking working mode, thereby meeting a demand of a use.

## Description

### Cross-Reference to Related Application

This application claims priority to Chinese Patent Application No. 202410130675.1, filed with China National Intellectual Property Administration on January 30, 2024 and entitled "CLOCK SIGNAL PROCESSING SYSTEM, METHOD, AND APPARATUS, AND SERVER", which is incorporated herein by reference in its entirety.

### Technical Field

The present application relates to the technical field of computers, and in particular, to a clock signal processing system, method, and apparatus, and a server.

### Background

At present, with generation of massive data, servers have been applied to various fields. Since development of upper-layer services in big data, cloud computing, and artificial intelligence is becoming increasingly complex, when a single central processing unit (CPU) of the server deals with complex applications, two technologies, overclocking and Turbo Boost, have been developed in order to improve performance and energy efficiency of the CPU.

In the related art, overclocking and non-overclocking are usually implemented based on two sets of hardware architectures. A user can choose to deploy an overclocking architecture or a non-overclocking architecture on the server based on an actual need.

However, as users' demands continue to change, some users require a server system to be compatible with overclocking and non-overclocking. However, a traditional hardware architecture cannot implement compatibility between overclocking and non-overclocking.

### Summary

The present application provides a clock signal processing system, method, and apparatus, and a server, to solve a defect that the related art cannot make a set of system compatible with overclocking and non-overclocking.

A first aspect of the present application provides a clock signal processing system, including: an overclocking module, a non-overclocking module, and a signal processor, wherein an output end of the overclocking module and an output end of the non-overclocking module are connected to an input end of the signal processor;
the overclocking module is configured to: generate an overclocked clock signal and transmit the overclocked clock signal to the signal processor;
the non-overclocking module is configured to: generate a non-overclocked clock signal and transmit the non-overclocked clock signal to the signal processor; and
the signal processor is configured to: select the overclocked clock signal or the non-overclocked clock signal as a target clock signal based on current service information of a server, and transmit the target clock signal to a clock signal receiving end through an output end.

In an optional implementation, the signal processor includes an overclocking register; and
the overclocking register is configured to record a clock signal requirement represented by the current service information of the server, to cause the signal processor to select the overclocked clock signal or the non-overclocked clock signal as the target clock signal based on the clock signal requirement.

In an optional implementation, the signal processor includes a requirement detection process and a signal processing process; the requirement detection process and the signal processing process are parallel processes; the requirement detection process is configured to: obtain the current service information of the server in real time and determine corresponding clock signal requirement; and the signal processing process is configured to monitor the overclocking register in real time, to select the overclocked clock signal or the non-overclocked clock signal as the target clock signal based on a clock signal requirement currently recorded by the overclocking register.

In an optional implementation, the signal processor is configured to:
obtain the current service information of the server;
determine the clock signal requirement based on the current service information; and
write the clock signal requirement into the overclocking register.

In an optional implementation, a service information communication link is arranged between the signal processor and a central processing unit (CPU) of the server; and
the signal processor obtains the current service information transmitted by the CPU through the service information communication link.

In an optional implementation, the service information communication link between the signal processor and the CPU of the server is constructed through a platform controller hub (PCH);
a direct media interface (DMI) link is arranged between the PCH and the CPU;
an enhanced serial peripheral interface (ESPI) link is arranged between the PCH and the signal processor; and
the service information communication link comprises the DMI link and the ESPI link.

In an optional implementation, the clock signal receiving end at least includes the CPU of the server and a peripheral component interconnect express (PCle) device;
the output end of the signal processor is connected to an input end of the CPU and an input end of the PCIe device; and
the signal processor is configured to fan out the target clock signal to the input end of the CPU and the input end of the PCIe device.

In an optional implementation, the PCIe device at least includes a graphic processing unit (GPU), a network card, and a solid state drive.

In an optional implementation, the overclocking module includes: an overclocked clock generator;
the overclocked clock generator is configured to: obtain an initial clock signal, perform frequency multiplication processing on the initial clock signal to obtain the target clock signal, perform overclocking processing on the target clock signal to obtain the overclocked clock signal, output the overclocked clock signal, and transmit the overclocked clock signal to the signal processor.

In an optional implementation, the overclocking module includes: a firmware memory; the firmware memory is connected to the overclocked clock generator through an I2C bus;
the firmware storage is configured to store overclocking firmware of the overclocked clock generator;
the overclocked clock generator is configured to access the firmware memory to load the overclocking firmware after obtaining the target clock signal, and be in an overclocking mode based on the overclocking firmware, so that the overclocked clock generator performs overclocking processing on the target clock signal in overclocking mode to obtain the overclocked clock signal.

In an optional implementation, the overclocked clock generator comprises: an overclocking phase-locked loop controller; and
the overclocking phase-locked loop controller is configured to perform the frequency multiplication processing on the initial clock signal obtained by the overclocked clock generator to obtain the target clock signal.

In an optional implementation, the non-overclocking module includes: a non-overclocked clock generator; and
the non-overclocked clock generator is configured to: obtain an initial clock signal, perform frequency multiplication processing on the initial clock signal to obtain the target clock signal, use the target clock signal as the non-overclocked clock signal, output the non-overclocked clock signal, and transmit the non-overclocked clock signal to the signal processor.

In an optional implementation, the non-overclocked clock generator includes: a non-overclocking phase-locked loop controller; and
the non-overclocking phase-locked loop controller is configured to perform the frequency multiplication processing on the initial clock signal obtained by the non-overclocked clock generator to obtain the target clock signal.

In an optional implementation, the system further includes: a crystal oscillator; an output end of the crystal oscillator is connected to an input end of the overclocked clock generator and an input end of the non-overclocked clock generator; and
the crystal oscillator is configured to generate the initial clock signal to transmit the initial clock signal to the overclocked clock generator and the non-overclocked clock generator.

In an optional implementation, the signal processor includes a field programmable gate array (FPGA) chip.

A second aspect of the present application provides a clock signal processing method, including:
obtaining current service information of a server;
receiving an overclocked clock signal or a non-overclocked clock signal based on the current service information;
using the overclocked clock signal or the non-overclocked clock signal as a target clock signal; and
transmitting the target clock signal to a clock signal receiving end.

In an optional implementation, the receiving an overclocked clock signal or a non-overclocked clock signal based on the current service information includes:
determining a clock signal requirement based on the current service information; and
gating a target up data link based on the clock signal requirement, to receive the overclocked clock signal or the non-overclocked clock signal based on the target up data link.

A third aspect of the present application provides a clock signal processing apparatus, including:
an obtaining module, configured to obtain current service information of a server;
a signal receiving module, configured to receive an overclocked clock signal or a non-overclocked clock signal based on the current service information;
a selection module, configured to use the overclocked clock signal or the non-overclocked clock signal as a target clock signal; and
a processing module, configured to transmit the target clock signal to a clock signal receiving end.

A fourth aspect of the present application provides a server, including: the above clock signal processing system as described in the first aspect and in various possible designs of the first aspect.

A fifth aspect of the present application provides an electronic device, including: at least one processor and a memory;
the memory stores a computer-executable instruction; and
the at least one processor executes the computer-executable instruction stored in the memory, to cause the at least one processor to perform the clock signal processing method as described in the first aspect and in various possible designs of the first aspect.

A sixth aspect of the present application provides a non-volatile computer-readable storage medium, having a computer-executable instruction stored therein. A processor, when executing the computer-executable instruction, implements the clock signal processing method as described in the first aspect and in various possible designs of the first aspect.

The technical solutions of the present application have the following advantages:
The present application provides a clock signal processing system, method, and apparatus, and a server. The system includes: an overclocking module, a non-overclocking module, and a signal processor. Output ends of both the overclocking module and the non-overclocking module are connected to an input end of the signal processor. The overclocking module is configured to: generate an overclocked clock signal and transmit the overclocked clock signal to the signal processor. The non-overclocking module is configured to: generate a non-overclocked clock signal and transmit the non-overclocked clock signal to the signal processor. The signal processor is configured to: select the overclocked clock signal or the non-overclocked clock signal as a target clock signal based on current service information of a server, and transmit the target clock signal to a clock signal receiving end through an output end. According to the system provided by the above solution, the overclocking module and the non-overclocking module are simultaneously arranged in the system, and switching and outputting of the overclocked clock signal and the non-overclocked clock signal are implemented through the signal processor based on the current service information of the server, so that the system is compatible with an overclocking working mode and a non-overclocking working mode, thereby meeting a demand of a user.

### Brief Description of the Drawings

To describe the technical solutions in the embodiments of the present application or in the related art more clearly, the following briefly introduces the accompanying drawings for describing the embodiments or the related art. Apparently, the accompanying drawings in the following description show some embodiments of the present application, and a person of ordinary skill in the art may still derive other drawings from the accompanying drawings.
Fig. 1 is a schematic structural diagram of a clock signal processing system according to an embodiment of the present application;
Fig. 2 is a schematic diagram of a working flow of a signal processor according to an embodiment of the present application;
Fig. 3 is a schematic diagram of an entire structure of a clock signal processing system according to an embodiment of the present application;
Fig. 4 is a schematic flowchart of a clock signal processing method according to an embodiment of the present application;
Fig. 5 is a schematic structural diagram of a clock signal processing apparatus according to an embodiment of the present application;
Fig. 6 is a schematic structural diagram of a server according to an embodiment of the present application; and
Fig. 7 is a schematic structural diagram of an electronic device according to an embodiment of the present application.

Through the above accompanying drawings, clear embodiments of the present application have been shown, which will be described in more detail below. These accompanying drawings and textual descriptions are not intended to limit the scope of the concept of the present application in any way, but rather to illustrate the concept of the present application for those skilled in the art by referring to specific embodiments.

### Detailed Description of the Embodiments

In order to make the objectives, technical solutions, and advantages of the embodiments of the present application clearer, the technical solutions in the embodiments of the present application are clearly and completely described below with reference to the accompanying drawings in the embodiments of the present application. Apparently, the described embodiments are merely some rather than all of the embodiments of the present application. All other embodiments obtained by a person of ordinary skill in the art based on the embodiments of the present application without making creative efforts shall fall within the protection scope of the present application.

In addition, the terms "first", "second", and the like are used for descriptive purposes only and are not to be construed as indicating or implying relative importance or to implicitly indicate the number of technical features indicated. In the following description of the embodiments, "plurality" means more than two, unless otherwise expressly defined.

In recent years, with the vast application market and the generation of various massive data, the development of upper-layer service in big data, cloud computing, and artificial intelligence has become increasingly complex. In order to improve performance and energy efficiency of a single CPU in dealing with complex upper-layer applications, two technologies, i.e. overclocking and Turbo Boost, have been developed. These technologies can automatically increase an operating frequency for speeding up, to easily perform multitasking with higher performance requirements. During switching of working tasks, if only a memory and a hard disk drive perform main work, the processor will immediately enter a power-saving state. This not only ensures effective utilization of energy, but also greatly increases a program speed. By intelligently increasing a processor speed, performance can be maximized based on application requirements, and an operating frequency can be increased by up to 20% for high-load tasks to achieve optimal performance, that is, to effectively improve the performance to meet the application requirements of high workloads. By allocating a plurality of threads for processing for artificial intelligence, physical simulation, and rendering needs, it can bring users a smoother and more realistic video experience.

Due to different user needs, some users can use the Turbo Boost function to enhance an upper-layer application experience, while some users can use the overclocking function to enhance a user experience. Since overclocking is implemented by increasing an external core clock frequency point of the CPU through an external hardware setting, in a traditional design scheme, overclocking and non-overclocking are implemented through two sets of hardware systems. However, some customers need to use one set of system to be compatible with overclocking and non-overclocking. Some services need to be run by using the overclocking function, while by considering the performance and energy efficiency of the CPU, some services need to be run only by using the non-overclocking function. Therefore, a 100 Mhz clock signal is switched between overclocking and non-overclocking based on switching requirements of different services on a bottom layer of an entire system of the same server, so that a client needs to use a set of hardware system on the bottom layer of the entire system to meet requirements of services on different application layers in the same system for overclocking and non-overclocking. However, the traditional hardware architecture cannot implement compatibility between overclocking and non-overclocking.

For the above problems, the embodiments of the present application provide a clock signal processing system, method, and apparatus, and a server. The system includes: an overclocking module, a non-overclocking module, and a signal processor. Output ends of both the overclocking module and the non-overclocking module are connected to an input end of the signal processor. The overclocking module is configured to: generate an overclocked clock signal and transmit the overclocked clock signal to the signal processor. The non-overclocking module is configured to: generate a non-overclocked clock signal and transmit the non-overclocked clock signal to the signal processor. The signal processor is configured to: select the overclocked clock signal or the non-overclocked clock signal as a target clock signal based on current service information of a server, and transmit the target clock signal to a clock signal receiving end through an output end. According to the system provided by the above solution, the overclocking module and the non-overclocking module are simultaneously arranged in the system, and switching and outputting of the overclocked clock signal and the non-overclocked clock signal are implemented through the signal processor based on the current service information of the server, so that the system is compatible with an overclocking working mode and a non-overclocking working mode, thereby meeting a demand of a user.

The following optional embodiments can be combined with each other, and the same or similar concepts or processes may not be repeated in some embodiments. The embodiments of the present application will be described below with reference to the accompanying drawings.

An embodiment of the present application provides a clock signal processing system, configured to implement compatibility between overclocking and non-overclocking.

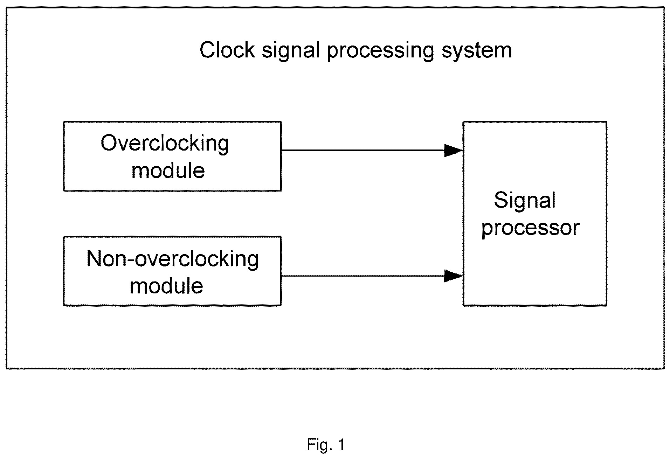

Fig. 1 is a schematic structural diagram of a clock signal processing system according to an embodiment of the present application. The system includes: an overclocking module, a non-overclocking module, and a signal processor. An output end of the overclocking module and an output end of the non-overclocking module are connected to an input end of the signal processor.

The overclocking module is configured to: generate an overclocked clock signal and transmit the overclocked clock signal to the signal processor. The non-overclocking module is configured to: generate a non-overclocked clock signal and transmit the non-overclocked clock signal to the signal processor. The signal processor is configured to: select the overclocked clock signal or the non-overclocked clock signal as a target clock signal based on current service information of a server, and transmit the target clock signal to a clock signal receiving end through an output end.

It should be noted that the current service information may at least represent that a CPU of a server is in a non-overclocking mode or an overclocking mode.

In some embodiments, the signal processor can first obtain the current service information of the server, and then select an uplink based on the current service information, such as selecting communication to the overclocking module to receive the overclocked clock signal; or selecting communication to the non-overclocking modules to receive the non-overclocked clock signal.

In some embodiments, the signal processor includes an overclocking register. The overclocking register is configured to record a clock signal requirement represented by the current service information of the server, to cause the signal processor to select the overclocked clock signal or the non-overclocked clock signal as the target clock signal based on the clock signal requirement.

In an optional implementation, the signal processor includes a requirement detection process and a signal processing process. The requirement detection process and the signal processing process are parallel processes. The requirement detection process is configured to: obtain the current service information of the server in real time, determine corresponding clock signal requirement, and write the obtained clock signal requirement into the overclocking register. The signal processing process is configured to monitor the overclocking register in real time, to select the overclocked clock signal or the non-overclocked clock signal as the target clock signal based on a clock signal requirement currently recorded by the overclocking register.

In some embodiments, the signal processor is configured to: obtain the current service information of the server; determine the clock signal requirement based on the current service information; and write the clock signal requirement into the overclocking register.

The current service information at least includes a name of a service currently run on the CPU and corresponding service attribute information.

In some embodiments, whether the service currently run on the CPU needs to run in the overclocking mode can be determined based on a preset overclocking service item table and the current service information. If it is determined that the service needs to run in overclocking mode, the clock signal requirement of the server is determined to be the overclocked clock signal, and then the clock signal requirement is written into the overclocking register. For example, when the clock signal requirement is the overclocked clock signal, "1" is written into the overclocking register, and when the clock signal requirement is the non-overclocked clock signal, "0" is written into the overclocking register. A default value of the overclocking register is "0", namely, instructing the signal processor to select the non-overclocked clock signal.

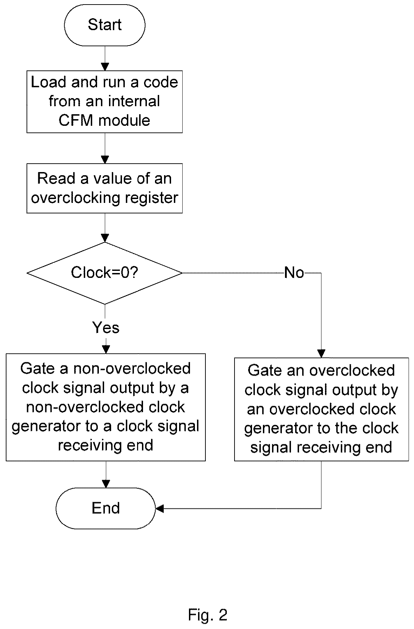

For example, Fig. 2 is a schematic diagram of a working flow of a signal processor according to an embodiment of the present application. After a system of the signal processor is powered on, a code is first loaded from an internal compactflash module (CFM), so that the signal processor can run the above clock signal processing logic by running the loaded code. The signal processor reads a value of the overclocking register from an internal register for determination. If overclock==0, the non-overclocked clock signal output by the non-overclocked clock generator is gated to the clock signal receiving end. If overclock==1, the overclocked clock signal output by the overclocked clock generator is gated to the clock signal receiving end.

In some embodiments, a service information communication link is arranged between the signal processor and the CPU of the server. The signal processor obtains the current service information transmitted by the CPU through the service information communication link.

In some embodiments, an optional type of the service information communication link can be determined based on a model of the CPU, so that the CPU can transmit the current service information to the signal processor through the service information communication link.

In some embodiments, the service information communication link between the signal processor and the CPU of the server is constructed through a platform controller hub. A direct media interface (DMI) link is arranged between the platform controller hub and the CPU. An enhanced serial peripheral interface (ESPI) link is arranged between the platform controller hub and the signal processor. The service information communication link includes the DMI link and the ESPI link.

The signal processor includes a field programmable gate array (FPGA) chip.

In some embodiments, the platform controller hub is abbreviated as PCH. In a case that the CPU does not have a PCH function in the present application, the service information communication link between the FPGA chip and the CPU of the server can be constructed by adding the PCH.

It should be noted that to improve running stability of the CPU, the current service information can be set as highest-priority information. For example, in a case that a current operating mode of the CPU is the overclocking mode, when some services that only requires a non-overclocked clock signal are run at an upstream of the CPU, the CPU can transmit the current service information to the PCH through the service information communication link in an interruption manner, and the PCH then transmits the current service information to the FPGA chip through the ESPI link to cause the FPGA chip to switch to output the non-overclocked clock signal.

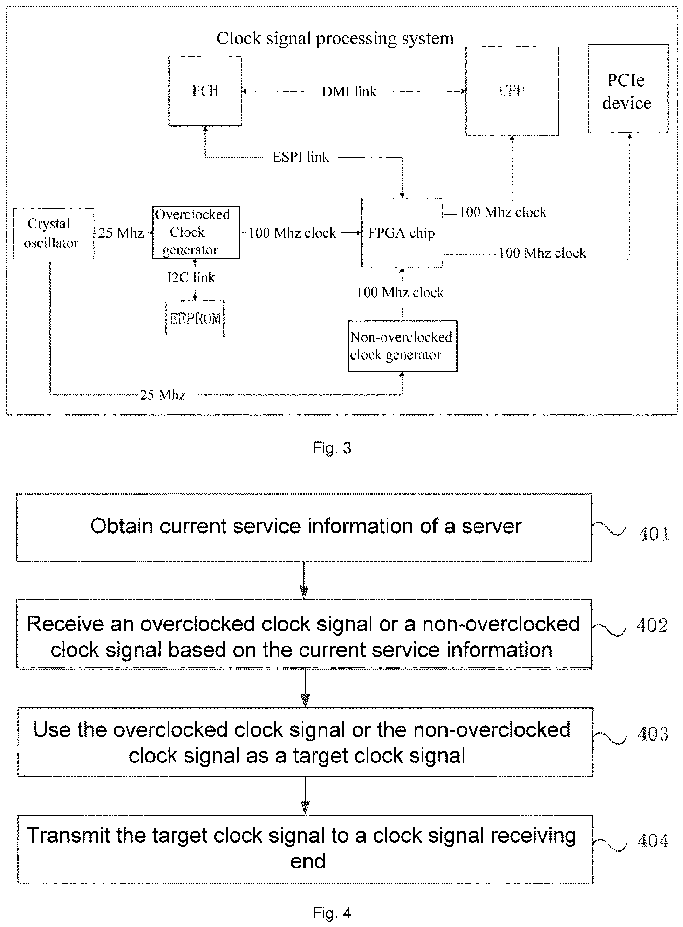

In some embodiments, Fig. 3 is a schematic diagram of an entire structure of a clock signal processing system according to an embodiment of the present application. The CPU and the PCH are interconnected through the DMI link, and the PCH and the FGPA chip are interconnected through the ESPI link.

In some embodiments, the clock signal receiving end at least includes the CPU of the server and a peripheral component interconnect express (PCle) device. The output end of the signal processor is connected to an input end of the CPU and an input end of the PCIe device. The signal processor is configured to fan out the target clock signal to the input end of the CPU and the input end of the PCIe device.

The PCIe device at least includes a graphics processing unit (GPU), a network card, and a solid state drive, and the CPU of the server and the PCIe device are connected through a PCIe link.

In some embodiments, a clock signal transmission link is arranged between the output end of the signal processor and the input end of the CPU, and a clock signal transmission link is also arranged between the output end of the signal processor and the input end of the PCIe device. The signal processor fans out the target clock signal to the input end of the CPU and the input end of the PCIe device through the clock signal transmission links.

It should be noted that the clock signal processing system provided by this embodiment of the present application can meet a requirement of switching a 100 Mhz clock signal between overclocking and non-overclocking based on switching requirements of different services on a bottom layer of an entire system of the same server, so that a user needs to use a set of hardware system on the bottom layer of the entire system to meet requirements of services on different application layers in the same system for overclocking and non-overclocking. The system provided by this embodiment of the present application has low implementation costs, only requires hardware and field-programmable gate array firmware (FPGA FW) for collaborative implementation, and has a simple hardware architecture, low maintenance and repair costs, and high reliability. Meanwhile, this architecture has high universality and can be applied to a server system of a platform such as X86, ARM, and MIPS.

Based on the above embodiments, as an implementable manner, in one embodiment, the overclocking module includes: an overclocked clock generator.

The overclocked clock generator is configured to: obtain an initial clock signal, perform frequency multiplication processing on the initial clock signal to obtain the target clock signal, perform overclocking processing on the target clock signal to obtain the overclocked clock signal, output the overclocked clock signal, and transmit the overclocked clock signal to the signal processor.

In some embodiments, as shown in Fig. 3, the overclocked clock generator first receives a 25 Mhz initial clock signal, performs frequency multiplication processing on the initial clock signal to multiply the 25 Mhz initial clock signal into a 100 Mhz target clock signal, then performs overclocking processing on the target clock signal to obtain a 100 MHz overclocked clock signal, and finally transmits the 100 MHz overclocked clock signal to the signal processor.

In some embodiments, the overclocking module includes: a firmware memory. The firmware memory is connected to the overclocked clock generator through an I2C bus. As shown in Fig. 3, the firmware memory can be an electrically erasable programmable read-only memory (EEPROM).

The firmware memory is configured to store overclocking firmware of the overclocked clock generator. The overclocked clock generator is configured to access the firmware memory to load the overclocking firmware after obtaining the target clock signal, and be in an overclocking mode based on the overclocking firmware, so that the overclocked clock generator performs overclocking processing on the target clock signal in overclocking mode to obtain the overclocked clock signal.

In some embodiments, the overclocked clock generator loads the overclocking firmware from the firmware memory into a chip of the overclocked clock generator, and modifies a relevant register of the overclocked clock generator based on the overclocking firmware to configure the overclocked clock generator to be in the overclocking mode, so that the overclocked clock generator can perform the overclocking processing on the target clock signal and obtain the overclocked clock signal.

In some embodiments, the overclocked clock generator includes: an overclocking phase-locked loop controller.

The overclocking phase-locked loop controller is configured to perform the frequency multiplication processing on the initial clock signal obtained by the overclocked clock generator to obtain the target clock signal.

In some embodiments, the overclocking phase-locked loop controller is PLL. The overclocked clock generator performs the frequency multiplication on the 25 Mhz initial clock signal into the 100 Mhz target clock signal based on the overclocking phase-locked loop controller.

Based on the above embodiments, as an implementable manner, in one embodiment, the non-overclocking module includes: a non-overclocked clock generator.

The non-overclocked clock generator is configured to obtain the initial clock signal, perform frequency multiplication processing on the initial clock signal to obtain the target clock signal, use the target clock signal as the non-overclocked clock signal, output the non-overclocked clock signal, and transmit the non-overclocked clock signal to the signal processor.

In some embodiments, as shown in Fig. 3, the non-overclocked clock generator first receives a 25 Mhz initial clock signal, performs frequency multiplication processing on the initial clock signal to multiply the 25 Mhz initial clock signal into a 100 Mhz target clock signal, and finally transmits the 100 MHz target clock signal as the non-overclocked clock signal to the signal processor.

Correspondingly, the non-overclocked clock generator includes: a non-overclocking phase-locked loop controller.

The non-overclocking phase-locked loop controller is configured to perform the frequency multiplication processing on the initial clock signal obtained by the non-overclocked clock generator to obtain the target clock signal.

In some embodiments, the overclocking phase-locked loop controller is PLL. The non-overclocked clock generator performs the frequency multiplication on the 25 Mhz initial clock signal into the 100 Mhz target clock signal based on the non-overclocking phase-locked loop controller.

In some embodiments, as shown in Fig. 3, the system further includes: a crystal oscillator. An output end of the crystal oscillator is connected to an input end of the overclocked clock generator and an input end of the non-overclocked clock generator.

The crystal oscillator is configured to generate the initial clock signal to transmit the initial clock signal to the overclocked clock generator and the non-overclocked clock generator.

The crystal oscillator can employ a 25 Mhz crystal (quartz crystal oscillator), which is configured to provide a 25 Mhz single-end clock signal (initial clock signal) to the overclocked clock generator and the non-overclocked clock generator.

The clock signal processing system provided by this embodiment of the present application includes: an overclocking module, a non-overclocking module, and a signal processor. Output ends of both the overclocking module and the non-overclocking module are connected to an input end of the signal processor. The overclocking module is configured to: generate an overclocked clock signal and transmit the overclocked clock signal to the signal processor. The non-overclocking module is configured to: generate a non-overclocked clock signal and transmit the non-overclocked clock signal to the signal processor. The signal processor is configured to: select the overclocked clock signal or the non-overclocked clock signal as a target clock signal based on current service information of a server, and transmit the target clock signal to a clock signal receiving end through an output end. According to the system provided by the above solution, the overclocking module and the non-overclocking module are simultaneously arranged in the system, and switching and outputting of the overclocked clock signal and the non-overclocked clock signal are implemented through the signal processor based on the current service information of the server, so that the system is compatible with an overclocking working mode and a non-overclocking working mode, thereby meeting a demand of a user. Moreover, switching of different modes of a 100 MHz clock signal can be implemented for different upper-layer service layers, thereby reducing power consumption of the entire system while an application-layer service satisfies a customer experience. This can greatly reduce hardware costs of a customer, and the system has low implementation costs, only requires hardware and FPGA FW for collaborative implementation, and has a simple hardware architecture, low maintenance and repair costs, high reliability, and excellent universality.

An embodiment of the present application provides a clock signal processing method for providing, to a clock signal receiving end, a clock signal that satisfies a current service scene of a server. An executing entity of this embodiment of the present application is an electronic device, such as an FPGA chip and another electronic device for implementing clock signal processing.

Fig. 4 is a schematic flowchart of a clock signal processing method according to an embodiment of the present application. The method includes:
Step 401: Obtain current service information of a server.
Step 402: Receive an overclocked clock signal or a non-overclocked clock signal based on the current service information.
Step 403: Use the overclocked clock signal or the non-overclocked clock signal as a target clock signal.
Step 404: Transmit the target clock signal to a clock signal receiving end.

In some embodiments, the clock signal requirement can be determined based on the current service information; and a target up data link is gated based on a clock signal requirement, to receive the overclocked clock signal or the non-overclocked clock signal based on the target up data link.

The target up data link means a data link that is communicated to an overclocked clock signal transmitting end or a non-overclocked clock signal transmitting end. An FPGA chip implements selection of the target clock signal by gating the target up data link.

Regarding the clock signal processing method in this embodiment, the optional implementations of the steps have been described in detail in the embodiments of the system, and will not be described in detail here.

The clock signal processing method provided by this embodiment of the present application is an execution method for the clock signal processing system provided by the above embodiment, and its implementation and principle are the same as those of the clock signal processing system and will not be elaborated here.

An embodiment of the present application provides a clock signal processing apparatus, configured to perform the clock signal processing method provided by the above embodiment.

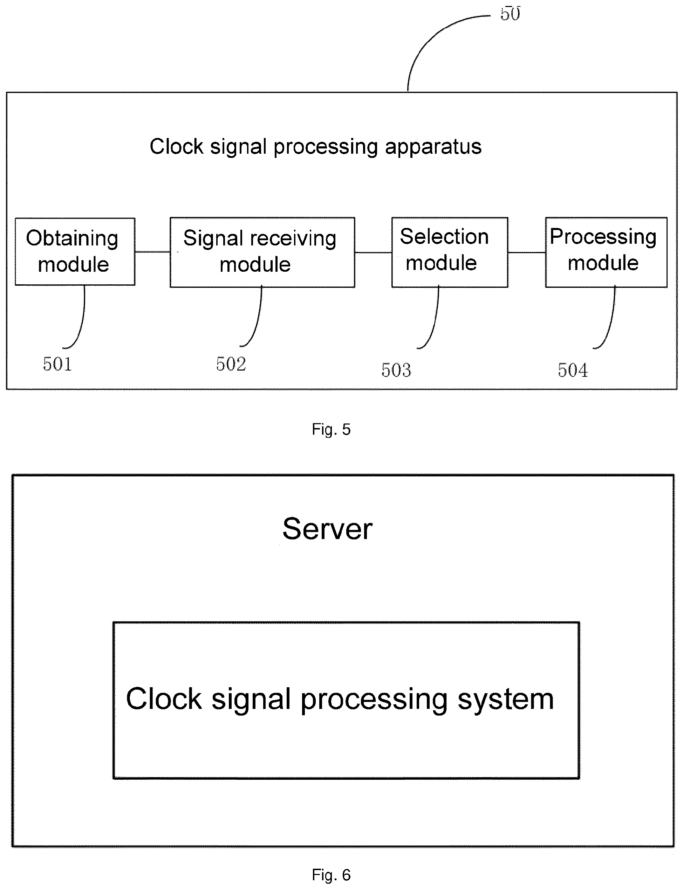

Fig. 5 is a schematic structural diagram of a clock signal processing apparatus according to an embodiment of the present application. The clock signal processing apparatus 50 includes: an obtaining module 501, a signal receiving module 502, a selection module 503, and a processing module 504.

The obtaining module is configured to obtain current service information of a server. The signal receiving module is configured to receive an overclocked clock signal or a non-overclocked clock signal based on the current service information. The selection module is configured to use the overclocked clock signal or the non-overclocked clock signal as a target clock signal. The processing module is configured to transmit the target clock signal to a clock signal receiving end.

Regarding the clock signal processing apparatus in this embodiment, optional manners in which the modules perform operations have been described in detail in the embodiments of the method, and will not be described in detail here.

The clock signal processing apparatus provided by this embodiment of the present application is configured to perform the clock signal processing method provided by the above embodiment, and its implementation and principle are the same as those of the clock signal processing method and will not be elaborated here.

An embodiment of the present application provides a server, configured to deploy the clock signal processing system provided by the above embodiment.

Fig. 6 is a schematic structural diagram of a server according to an embodiment of the present application. The server includes the clock signal processing system provided by the above embodiment.

The clock signal processing system is configured to cause the server to implement compatibility between overclocking and non-overclocking.

The server provided by this embodiment of the present application is configured to deploy the clock signal processing system provided by the above embodiment, and its implementation and principle are the same as those of the clock signal processing system and will not be elaborated here.

An embodiment of the present application provides an electronic device, configured to perform the clock signal processing method provided by the above embodiment.

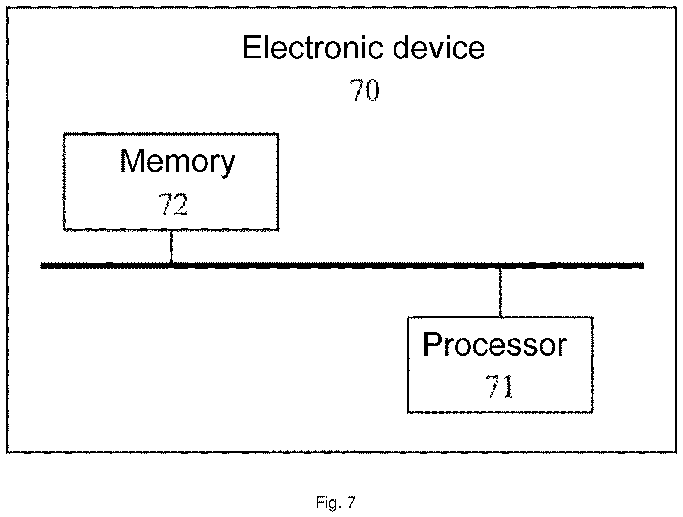

Fig. 7 is a schematic structural diagram of an electronic device according to an embodiment of the present application. The electronic device 70 includes: at least one processor 71 and a memory 72.

The memory stores a computer-executable instruction. The at least one processor executes the computer-executable instruction stored in the memory to cause the at least one processor to perform the clock signal processing method provided by the above embodiment.

The electronic device provided by this embodiment of the present application is configured to perform the clock signal processing method provided by the above embodiment, and its implementation and principle are the same as those of the clock signal processing method and will not be elaborated here.

An embodiment of the present application further provides a non-volatile computer-readable storage medium, having a computer-executable instruction stored therein. A processor, when executing the computer-executable instruction, implements the clock signal processing method provided by any of the above embodiments.

The non-volatile readable storage medium including the computer-executable instruction, which is provided by this embodiment of the present application, can be configured to store the computer-executable instruction of the clock signal processing method provided in the foregoing embodiment, and its implementation manner and principle are the same as those of the clock signal processing method and will not be elaborated here.

In the several embodiments provided in the present application, it should be understood that the disclosed apparatus and method are achieved in other manners. For example, the above apparatus embodiments are merely illustrative. For example, the division of the units is only one type of logical functional division, and other divisions is achieved in practice. For example, multiple units or components can be combined or integrated into another system, or some features can be omitted, or not executed. In addition, the shown or discussed mutual coupling or direct coupling or communication connection is an indirect coupling or communication connection through some interfaces, apparatuses or units, and is in an electrical, mechanical or another form.

The units described as separate parts may or may not be physically separated, and parts displayed as units may or may not be physical units, that is, may be located in one position, or may be distributed on multiple network units. Some or all of the units are selected according to actual needs to achieve the objective of the solution of this embodiment.

In addition, functional units in the embodiments of this application may be integrated into one processing unit, or each of the units may exist alone physically, or two or more units are integrated into one unit. The integrated unit can be implemented in both a form of hardware and a form of hardware plus software functional units.

The integrated unit implemented in the form of software functional units may be stored in a non-volatile computer-readable storage medium. The software functional units are stored in one non-volatile readable storage medium, including a plurality of instructions for causing a computer device (which may be a personal computer, a server, a network device, or the like) or a processor to perform some steps of the method of the embodiments of the present application. The foregoing non-volatile storage medium includes: various non-volatile readable storage media that can store program codes, such as a USB flash drive, a mobile hard disk drive, a read-only memory (ROM), a random access memory (RAM), a magnetic disk, and an optical disc.

A person skilled in the art can clearly know that for ease and simplicity of description, division of the above functional modules is exemplified only. In practical applications, the foregoing functions may be allocated to be completed by different functional modules as required, that is, an inner structure of the apparatus is divided into different functional modules, so as to complete some of the functions described above. For working processes of the apparatus described above, refer to the corresponding processes in the foregoing method embodiments, and details are not elaborated here.

It should be finally noted that: The foregoing various embodiments are merely intended to describe the technical solutions of the present application, but not for limiting the present application. Although the present application is described in detail with reference to the foregoing various embodiments, persons of ordinary skill in the art should understand that they may still make modifications to the technical solutions described in the foregoing embodiments or make equivalent replacements to partial or all technical features thereof. However, these modifications or replacements do not make the essence of the corresponding technical solutions depart from the scope of the technical solutions of the various embodiments of the present application.

## Claims

1. A clock signal processing system, comprising: an overclocking module, a non-overclocking module, and a signal processor, wherein an output end of the overclocking module and an output end of the non-overclocking module are connected to an input end of the signal processor;
the overclocking module is configured to generate an overclocked clock signal and transmit the overclocked clock signal to the signal processor;
the non-overclocking module is configured to generate a non-overclocked clock signal and transmit the non-overclocked clock signal to the signal processor; and
the signal processor is configured to select the overclocked clock signal or the non-overclocked clock signal as a target clock signal based on current service information of a server, and transmit the target clock signal to a clock signal receiving end through an output end.

2. The system according to claim 1, wherein the signal processor comprises: an overclocking register;
the overclocking register is configured to record a clock signal requirement represented by the current service information of the server, to cause the signal processor to select the overclocked clock signal or the non-overclocked clock signal as the target clock signal based on the clock signal requirement.

3. The system according to claim 2, wherein the signal processor comprises a requirement detection process and a signal processing process; the requirement detection process and the signal processing process are parallel processes; the requirement detection process is configured to obtain the current service information of the server in real time and determine corresponding clock signal requirement; and the signal processing process is configured to monitor the overclocking register in real time, to select the overclocked clock signal or the non-overclocked clock signal as the target clock signal based on a clock signal requirement currently recorded by the overclocking register.

4. The system according to claim 2, wherein the signal processor is configured to:
obtain the current service information of the server;
determine the clock signal requirement based on the current service information; and
write the clock signal requirement into the overclocking register.

5. The system according to claim 1, wherein a service information communication link is arranged between the signal processor and a central processing unit (CPU) of the server; and
the signal processor obtains the current service information transmitted by the CPU through the service information communication link.

6. The system according to claim 5, wherein the service information communication link between the signal processor and the CPU of the server is constructed through a platform controller hub (PCH);
a direct media interface (DMI) link is arranged between the PCH and the CPU;
an enhanced serial peripheral interface (ESPI) link is arranged between the PCH and the signal processor; and
the service information communication link comprises the DMI link and the ESPI link.

7. The system according to claim 1, wherein the clock signal receiving end at least comprises a CPU of the server and a peripheral component interconnect express (PCle) device;
the output end of the signal processor is connected to an input end of the CPU and an input end of the PCIe device; and
the signal processor is configured to fan out the target clock signal to the input end of the CPU and the input end of the PCIe device.

8. The system according to claim 7, wherein the PCIe device at least comprises a graphics processing unit (GPU), a network card, and a solid state drive.

9. The system according to claim 1, wherein the overclocking module comprises: an overclocked clock generator; and
the overclocked clock generator is configured to: obtain an initial clock signal, perform frequency multiplication processing on the initial clock signal to obtain the target clock signal, perform overclocking processing on the target clock signal to obtain the overclocked clock signal, output the overclocked clock signal, and transmit the overclocked clock signal to the signal processor.

10. The system according to claim 9, wherein the overclocking module comprises: a firmware memory; the firmware memory is connected to the overclocked clock generator through an I2C bus;
the firmware storage is configured to store overclocking firmware of the overclocked clock generator;
the overclocked clock generator is configured to access the firmware memory to load the overclocking firmware after obtaining the target clock signal, and be in an overclocking mode based on the overclocking firmware, so that the overclocked clock generator performs overclocking processing on the target clock signal in overclocking mode to obtain the overclocked clock signal.

11. The system according to claim 9, wherein the overclocked clock generator comprises: an overclocking phase-locked loop controller; and
the overclocking phase-locked loop controller is configured to perform the frequency multiplication processing on the initial clock signal obtained by the overclocked clock generator to obtain the target clock signal.

12. The system according to claim 1, wherein the non-overclocking module comprises: a non-overclocked clock generator; and
the non-overclocked clock generator is configured to: obtain an initial clock signal, perform frequency multiplication processing on the initial clock signal to obtain the target clock signal, use the target clock signal as the non-overclocked clock signal, output the non-overclocked clock signal, and transmit the non-overclocked clock signal to the signal processor.

13. The system according to claim 12, wherein the non-overclocked clock generator comprises:
a non-overclocking phase-locked loop controller; and
the non-overclocking phase-locked loop controller is configured to perform the frequency multiplication processing on the initial clock signal obtained by the non-overclocked clock generator to obtain the target clock signal.

14. The system according to claim 9 or 12, wherein the system further comprises: a crystal oscillator; an output end of the crystal oscillator is connected to an input end of the overclocked clock generator and an input end of the non-overclocked clock generator; and
the crystal oscillator is configured to generate the initial clock signal to transmit the initial clock signal to the overclocked clock generator and the non-overclocked clock generator.

15. The system according to claim 1, wherein the signal processor comprises a field programmable gate array (FPGA) chip.

16. A clock signal processing method, comprising:
obtaining current service information of a server;
receiving an overclocked clock signal or a non-overclocked clock signal based on the current service information;
using the overclocked clock signal or the non-overclocked clock signal as a target clock signal; and
transmitting the target clock signal to a clock signal receiving end.

17. The method according to claim 16, wherein the receiving an overclocked clock signal or a non-overclocked clock signal based on the current service information comprises:
determining a clock signal requirement based on the current service information; and
gating a target up data link based on the clock signal requirement, to receive the overclocked clock signal or the non-overclocked clock signal based on the target up data link.

18. A clock signal processing apparatus, comprising:
an obtaining module, configured to obtain current service information of a server;
a signal receiving module, configured to receive an overclocked clock signal or a non-overclocked clock signal based on the current service information;
a selection module, configured to use the overclocked clock signal or the non-overclocked clock signal as a target clock signal; and
a processing module, configured to transmit the target clock signal to a clock signal receiving end.

19. A server, comprising the clock signal processing system according to any one of claims 1 to 15.

20. An electronic device, comprising: at least one processor and a memory, wherein
the memory stores a computer-executable instruction; and
the at least one processor executes the computer-executable instruction stored in the memory to cause the at least one processor to perform the method according to any one claim 16 or 17.

21. A non-volatile computer-readable storage medium, having a computer-executable instruction stored therein, wherein a processor, when executing the computer-executable instruction, implements the method according to claim 16 or 17.
